# EUROPÄISCHE PATENTSCHRIFT

(11) **EP 1 609 562 B1**
(45) Veröffentlichungstag und Bekanntmachung des Hinweises auf die Patenterteilung: **01.08.2007**
(21) Anmeldenummer: 04015054.2
(22) Anmeldetag: 26.06.2004
(51) Int. Cl.: B23Q 1/01, B23Q 1/62, B23Q 1/48

(54) **Horizontale Werkzeugmaschine mit zwei vertikalen miteinander verbundenen Rahmen**
Horizontal machine tool with two vertical frames connected to each other
Machine-outil horizontale avec deux cadres verticaux reliés mutuellement

(43) Veröffentlichungstag der Anmeldung: 28.12.2005
(73) Patentinhaber: Schwäbische Werkzeugmaschinen GmbH, 78713 Schramberg-Waldmössingen (DE)
(72) Erfinder: Weber, Stefan, 78655 Dunningen-Seedorf (DE); Armleder, Wolfgang, 78628 Rottweil (DE)
(74) Vertreter: Kohler Schmid Möbus

(56) Entgegenhaltungen:
- EP-A- 0 816 012
- EP-A- 1 201 351
- US-A1- 2003 050 160
- US-B1- 6 273 653

## Beschreibung

Die vorliegende Erfindung betrifft eine horizontale Werkzeugmaschine, die einen ersten vertikalen Rahmen mit mindestens einer horizontal oder raumschräg angeordneten Arbeitsspindel und einen zweiten vertikalen Rahmen mit einer Werkstückhalterung aufweist, wobei die beiden Rahmen unterhalb und oberhalb der mindestens einen Arbeitsspindel miteinander verbunden sind.

Eine derartige Werkzeugmaschine ist durch die US-6,273,653-B bekannt geworden.

Bei der aus der US-6,273,653-B bekannten Werkzeugmaschine ist die Arbeitsspindel an einem vertikalen Rahmen verschiebbar, nämlich an einer in X-, Y- und Z-Richtung verfahrbaren Schlitteneinheit, angeordnet und die Werkstückhalterung am anderen vertikalen Rahmen unverschiebbar vorgesehen.

Aus der DE 101 44 678 A1 ist eine horizontale Werkzeugmaschine in Form eines Fräs- und Bohrbearbeitungszentrums bekannt. Diese Werkzeugmaschine hat einen Maschinenständer, ein Spindelgehäuse mit einer horizontalen Arbeitsspindel und einen in mehreren Achsen bewegbaren Werkstückträger für die Aufnahme der zu bearbeitenden Werkstücke. Die Arbeitsspindel ist entlang ihrer Achse (Z-Richtung) und der Werkstückträger über einen Kreuzschlitten in X- und Y-Richtung verschiebbar. Der Werkstückträger ist am Kreuzschlitten hängend gehalten, so dass die in Z-Richtung wirkenden Bearbeitungskräfte am Werkstück und Werkstückträger zu Querkräften führen, die vom Kreuzschlitten an den Maschinenständer abgeleitet werden müssen. Eine Querbelastung der Z-Achse kann bei der Zerspanung zu sehr hohen Nachgiebigkeiten, d.h. zu Verlagerungen zwischen Werkstückseite und Werkzeugseite, führen und so nur in eingeschränktem Maße für eine MehrspindelBearbeitung eingesetzt werden, bei der mehrere Arbeitsspindeln zu "Bohrbildern", d.h. zu Mehrspindelbohrköpfen, zusammengefasst sind.

Demgegenüber ist es die Aufgabe der vorliegenden Erfindung, eine horizontale Werkzeugmaschine der eingangs genannten Art dahingehend weiterzubilden, dass alternative Mittel zur relativen Bewegung des Werkstücks und der Arbeitsspindel geschaffen werden und eine 4-Achsen-Bearbeitung des Werkstücks ermöglicht wird.

Diese Aufgabe wird erfindungsgemäß dadurch gelöst, dass am ersten Rahmen mehrere stationäre Arbeitsspindeln nebeneinander vorgesehen sind und dass die Werkstückhalterung an einer in X-, Y- und Z-Richtung verfahrbaren Schlitteneinheit, welche am zweiten vertikalen Rahmen vorgesehen ist, schwenkbar um eine in X-Richtung verlaufende horizontale Achse gelagert ist.

Erfindungsgemäß wird das Werkstück zur Bearbeitung in die Kraftrichtung der Z-Achse geschwenkt, so dass Querbelastungen durch die Arbeitsspindeln vermieden werden. Die Werkstückhalterung liegt in Z-Richtung der Arbeitsspindel gegenüber, ist also den Bearbeitungskräften genau entgegengesetzt, was zur höchsten Steifigkeit der Werkzeugmaschine führt. Die Antriebsaggregate (Motoren) der Arbeitsspindeln sind aufgrund der horizontalen Ausrichtung frei zugänglich. Eine Werkstückzuführung erfordert nur eine Bewegung der Werkstückhalterung in X-Richtung und kann "stehend" oder "hängend" ausgeführt sein, wobei im letzteren Fall die Werkstückzuführung nicht mit anfallenden Bearbeitungsspänen verunreinigt wird. Das Positionieren, also das Greifen und Ablegen des oder der Werkstücke, erfolgt mit Hilfe der XYZ-Bewegung der Werkstückhalterung ("Pick Up").

Vorzugsweise ist die Werkstückhalterung an der Schlitteneinheit auch schwenkbar um eine zu ihrer horizontalen Schwenkachse rechtwinklige Achse gelagert, um eine 5-achsige Bearbeitung zu ermöglichen.

Um die in Z-Richtung wirkenden hohen Bearbeitungskräfte, insbesondere bei einer Mehrspindelbearbeitung mit mehreren nebeneinander vorgesehenen Arbeitsspindeln, aufnehmen zu können, sind die beiden Rahmen durch Querträger, insbesondere unten und oben über jeweils zwei Querträger, miteinander verbunden.

Die Arbeitsspindeln sind im Wesentlichen werkstückspezifisch in den Rahmen eingebaut. Meistens werden die Spindelachsen horizontal angeordnet, jedoch sind auch raumschräge Anordnungen möglich. Die Arbeitsspindeln können in einem begrenzten Umfang auch oben oder seitlich angeordnet sein, dies ergibt sich aus einer "raumschrägen" Bearbeitungsrichtung.

Weitere bevorzugte Ausgestaltungen der Erfindung sind Gegenstand der Unteransprüche. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: die erfindungsgemäße horizontale Werkzeugmaschine in perspektivischer Ansicht; und
- Fig. 2: einen in Fig. 1 gezeigten Z-Schlitten der Werkzeugmaschine in einer Detailansicht.

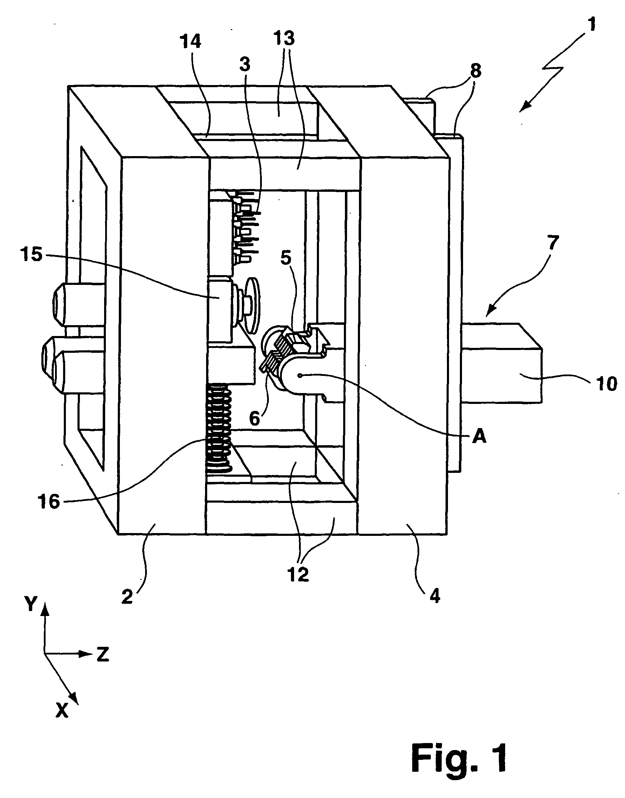

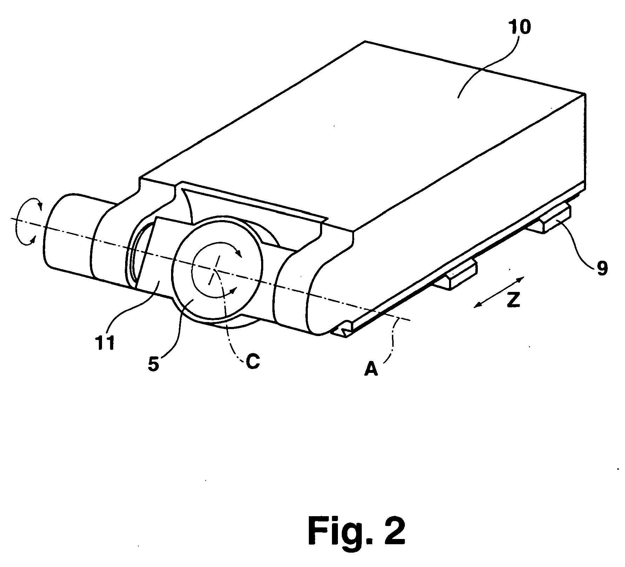

Die in **Fig. 1** gezeigte horizontale Werkzeugmaschine (horizontales Bearbeitungszentrum) **1** weist einen ersten vertikalen Rahmen **2** mit mehreren stationär angeordneten, horizontalen Arbeitsspindeln **3** und einen zweiten vertikalen Rahmen **4** mit einer Werkstückhalterung **5** zur Aufnahme von Werkstücken **6** auf. Die Werkstückhalterung 5 ist in X-, Y-, und Z-Richtung mittels einer Schlitteneinheit **7** verschiebbar. Dazu sind am zweiten Rahmen 4 beidseitig vertikale Führungen **8** vorgesehen, in denen ein Y-Schlitten (nicht gezeigt) der Schlitteneinheit 7 in Y-Richtung verschiebbar ist. An diesem Y-Schlitten ist ein X-Schlitten (nicht gezeigt) der Schlitteneinheit 7 in X-Richtung verschiebbar geführt, in dessen Z-Führungen **9 (Fig. 2)** wiederum ein Z-Schlitten **10** der Schlitteneinheit 7 in Z-Richtung verschiebbar geführt ist. Die Arbeitsspindeln 3 sind werkstückspezifisch zu "Bohrbildern", d. h. zu Mehrspindelbohrköpfen, zusammengefasst.

Die in Fig. 2 vereinfacht als Haltefläche dargestellte Werkstückhalterung 5 ist stirnseitig am Z-Schlitten 10 angeordnet und dort für eine 4- und 5-achsige Bearbeitung schwenkbar um eine in X-Richtung verlaufende horizontale Achse **A** und zusätzlich schwenkbar um eine dazu rechtwinklige Achse **C** gelagert. Dazu ist beidseitig am Z-Schlitten 10 ein Schwenkbalken **11** schwenkbar um die Achse A gelagert, in dem wiederum die Werkstückhalterung 5 um die Achse C drehbar gelagert ist. Die Werkstückhalterung 5 weist einen automatischen Spannablauf auf, der ein Halten des Werkstückes 6 während der Zerspanung sowie ein Greifen des Werkstücks 6 von einer Zuführeinrichtung ermöglicht. Die Bearbeitungsebene kann so in die Hauptbelastungsrichtung der Z-Achse geschwenkt werden.

Die beiden Rahmen 2, 4 sind unterhalb und oberhalb der Arbeitsspindeln 3 miteinander über zwei untere Querträger **12** und zwei obere Querträger **13** verbunden, um die in Z-Richtung wirkenden hohen Bearbeitungskräfte, insbesondere bei einer Mehrspindelbearbeitung, aufnehmen zu können. Oben zwischen den beiden Rahmen 2, 4 bzw. zwischen den beiden oberen Querträgern 13 befindet sich eine Aussparung **14** zur Bestückung der Arbeitsspindeln 3 mit Bohrköpfen. Weiterhin sind am ersten Rahmen 2 unterhalb der Arbeitsspindeln 3 eine stationäre Montageeinheit **15** und eine Umformeinheit **16** vorgesehen. Weiterhin kann auch noch eine Mess-/Prüfeinrichtung (nicht gezeigt) zum Vermessen bzw. Prüfen des bearbeiteten Werkstückes 6 vorgesehen sein.

Das Werkstück 6 wird zur Bearbeitung in die Kraftrichtung der Z-Achse geschwenkt, so dass Querbelastungen durch die Arbeitsspindeln 3 vermieden werden. Die Arbeitsspindeln 3 sind der Z-Achse gegenüber angeordnet, also genau entgegengesetzt den Bearbeitungskräften, was zur höchsten Steifigkeit führt. Die Antriebsaggregate (Motoren) der Arbeitsspindeln 3 sind aufgrund der horizontalen Ausrichtung frei zugänglich. Das Positionieren, also das Greifen und Ablegen des oder der Werkstücke 6, erfolgt mit Hilfe der Schlitteneinheit 7. Eine Werkstückzuführung (nicht gezeigt) erfordert nur eine Bewegung der Werkstückhalterung 5 in X-Richtung. Die Zuführeinrichtung kann "stehend" oder "hängend" ausgeführt sein.

## Patentansprüche

1. Werkzeugmaschine (1), die einen ersten vertikalen Rahmen (2) mit mindestens einer horizontal oder raumschräg angeordneten Arbeitsspindel (3) und einen zweiten vertikalen Rahmen (4) mit einer Werkstückhalterung (5) aufweist, wobei die beiden Rahmen (2, 4) unterhalb und oberhalb der mindestens einen Arbeitsspindel (3) miteinander verbunden sind
**dadurch gekennzeichnet,**
**dass** am ersten Rahmen (2) mehrere stationäre Arbeitsspindeln (3) nebeneinander vorgesehen sind und dass die Werkstückhalterung (5) an einer in X-, Y- und Z-Richtung verfahrbaren Schlitteneinheit (7), welche am zweiten vertikalen Rahmen (4) vorgesehen ist, schwenkbar um eine in X-Richtung verlaufende horizontale Achse (A) gelagert ist.

2. Werkzeugmaschine nach Anspruch 1, **dadurch gekennzeichnet, dass** die Werkstückhalterung (5) an der Schlitteneinheit (7) auch schwenkbar um eine zu ihrer horizontalen Schwenkachse (A) rechtwinklige Achse (C) gelagert ist.

3. Werkzeugmaschine nach Anspruch 1 oder 2, **dadurch gekennzeichnet, dass** die Werkstückhalterung (5) beidseitig an einem Z-Schlitten (10) der Schlitteneinheit (7) um die horizontale Schwenkachse (A) gelagert ist.

4. Werkzeugmaschine nach einem der vorhergehenden Ansprüche, **dadurch gekennzeichnet, dass** die beiden Rahmen (2, 4) durch Querträger (12, 13) miteinander verbunden sind.

5. Werkzeugmaschine nach Anspruch 4, **dadurch gekennzeichnet, dass** die beiden Rahmen (2, 4) unten über zwei Querträger (12) und oben über mindestens einen Querträger (13), vorzugsweise über zwei Querträger (13), miteinander verbunden sind.

6. Werkzeugmaschine nach einem der vorhergehenden Ansprüche, **dadurch gekennzeichnet, dass** beidseitig am zweiten Rahmen (4) vertikale Führungen (8) für einen Y-Schlitten der Schlitteneinheit (7) vorgesehen sind.

7. Werkzeugmaschine nach einem der vorhergehenden Ansprüche, **dadurch gekennzeichnet, dass** zusätzlich zur mindestens einen Arbeitsspindel (3) am ersten Rahmen (2) mindestens eine Montageeinheit (15) und/oder eine Umformeinheit (16) und/oder eine Mess-/Prüfeinrichtung vorgesehen sind.

8. Werkzeugmaschine nach einem der vorhergehenden Ansprüche, **dadurch gekennzeichnet, dass** zwischen den beiden Rahmen (2, 4) oben eine Aussparung (14) zur Bestückung der bzw. jeder Arbeitsspindel (3) mit Bohrköpfen vorgesehen ist.

## Claims

1. Machine tool (1) comprising a first vertical frame (2) with at least one working spindle (3) disposed either horizontally or inclined relative to the room, and a second vertical frame (4) comprising a workpiece holder (5), wherein the two frames (2, 4) are connected to each other below and above the at least one working spindle (3), **characterized in**
**that** several stationary working spindles (3) are provided next to each other on the first frame (2) and that the workpiece holder (5) is disposed on a carriage unit (7), which is provided on the second vertical frame (4) and can be displaced in the X, Y and Z directions, in such a manner that it can be pivoted about a horizontal axis (A) extending in the X direction.

2. Machine tool according to claim 1, **characterized in that** the workpiece holder (5) is disposed on the carriage unit (7) such that it can also be pivoted about an axis (C) extending at a right angle relative to its horizontal pivot axis (A).

3. Machine tool according to claim 1 or 2, **characterized in that** the workpiece holder (5) is disposed on both sides on a Z carriage (10) of the carriage unit (7) about the horizontal pivot axis (A).

4. Machine tool according to any one of the preceding claims, **characterized in that** the two frames (2, 4) are connected to each other via transverse bars (12, 13).

5. Machine tool according to claim 4, **characterized in that** the two frames (2, 4) are connected to each other at the bottom via two transverse bars (12) and at the top via at least one transverse bar (13), preferably via two transverse bars (13).

6. Machine tool according to any one of the preceding claims, **characterized in that** vertical guidances (8) for a Y carriage of the carriage unit (7) are provided on both sides of the second frame (4).

7. Machine tool according to any one of the preceding claims, **characterized in that** at least one assembly unit (15) and/or a shaping unit (16) and/or a measuring/testing unit is/are provided on the first frame (2) in addition to the at least one working spindle (3).

8. Machine tool according to any one of the preceding claims, **characterized in that** a recess (14) is provided at the top between the two frames (2, 4) for supplying each working spindle(s) (3) with drill heads.

## Revendications

1. Machine-outil (1) comprenant un premier cadre vertical (2) comportant au moins une broche de travail (3) agencée à l'horizontale ou à l'oblique dans l'espace, et un second cadre vertical (4) présentant un support (5) de pièces à usiner, les deux cadres (2, 4) étant reliés l'un à l'autre au-dessous et au-dessus de la broche de travail (3) prévue au minimum,
**caractérisée par le fait**
**que** plusieurs broches de travail (3) stationnaires sont prévues en juxtaposition sur le premier cadre (2) ; et par le fait que le support (5) de pièces à usiner est monté à pivotement autour d'un axe horizontal (A) s'étendant dans la direction des X, sur une unité (7) à chariots qui est mobile dans les directions des X, des Y et des Z, et est prévue sur le second cadre vertical (4).

2. Machine-outil selon la revendication 1, **caractérisée par le fait que** le support (5) de pièces à usiner est également monté à pivotement, sur l'unité (7) à chariots, autour d'un axe (C) perpendiculaire à son axe horizontal de pivotement (A).

3. Machine-outil selon la revendication 1 ou 2, **caractérisée par le fait que** le support (5) de pièces à usiner est monté, autour de l'axe horizontal de pivotement (A), de part et d'autre sur un chariot (10) de l'unité (7) à chariots qui est mobile dans la direction des Z.

4. Machine-outil selon l'une des revendications précédentes, **caractérisée par le fait que** les deux cadres (2, 4) sont reliés l'un à l'autre par l'intermédiaire de supports transversaux (12, 13).

5. Machine-outil selon la revendication 4, **caractérisée par le fait que** les deux cadres (2, 4) sont reliés l'un à l'autre en partie basse par l'intermédiaire de deux supports transversaux (12) et, en partie haute, par l'intermédiaire d'au moins un support transversal (13) et, de préférence, de deux supports transversaux (13).

6. Machine-outil selon l'une des revendications précédentes, **caractérisée par le fait que** des guides verticaux (8) sont prévus de part et d'autre, sur le second cadre (4), pour un chariot de l'unité (7) à chariots qui est mobile dans la direction des Y.

7. Machine-outil selon l'une des revendications précédentes, **caractérisée par le fait qu'**au moins une unité de montage (15) et/ou une unité (16) de mise en forme et/ou un système de mesure/contrôle est (sont) prévu(e)s, sur le premier cadre (2), en plus de la broche de travail (3) prévue au minimum.

8. Machine-outil selon l'une des revendications précédentes, **caractérisée par le fait qu'**une dépouille (14) est prévue en partie haute, entre les deux cadres (2, 4), pour garnir respectivement la ou chaque broche de travail (3) de têtes de perçage.
